# EUROPÄISCHE PATENTSCHRIFT

(11) **EP 1 559 467 B1**
(45) Veröffentlichungstag und Bekanntmachung des Hinweises auf die Patenterteilung: **25.01.2006**
(21) Anmeldenummer: 04405055.7
(22) Anmeldetag: 29.01.2004
(51) Int. Cl.: B01D 29/03, B01D 29/52

(54) **Schutzsieb zum Abschirmen eines Saugraums**
Strainer for shielding a suction inlet
Tamis pour protéger une bouche d'aspiration

(43) Veröffentlichungstag der Anmeldung: 03.08.2005
(73) Patentinhaber: CCI AG, 8404 Winterthur (CH)
(72) Erfinder: Kielbowicz, Stanislaw, 8820 Wädenswil (CH)
(74) Vertreter: Sulzer Management AG

(56) Entgegenhaltungen:
- CH-A- 689 687
- DE-A- 3 004 682
- US-A- 4 049 406
- US-A1- 2003 196 950

## Beschreibung

Die Erfindung betrifft ein Schutzsieb zum Abschirmen eines Saugraums und einer daran angeschlossenen Saugleitung gemäss Oberbegriff von Anspruch 1.

Ein Reaktor in einem Kernkraftwerk ist von einem Sicherheitsbehälter aus Beton und Stahl, dem sogenannten Containment, umgeben. Weiter ist der Reaktor mit einem Notkühlsystem (im Englischen Emergency Core Cooling oder ECC genannt) ausgestattet, um den Reaktorkern in einem Störfall zu kühlen. In einem solchen Fall wird das Wasser aus dem untersten Teil des Sicherheitsbehälters, dem sogenannten Sumpf, durch Notkühlpumpen über Saugleitungen angesaugt und durch den Reaktorkern umgewälzt.

Im Auslegungs-Szenarium für das Notkühlsystem wird davon ausgegangen, dass bei einem Störfall entstehende Isolationstrümmer und Betonbrocken in den Sumpf hinunterfallen und/oder durch das abfliessende Wasser in den Sumpf hinuntergespült werden. Damit die Trümmer die Funktionstüchtigkeit des Notkühlsystems nicht beeinträchtigen können, sind vor den Eintrittsöffnungen der zu den Notkühlpumpen führenden Saugleitungen spezielle Abschirmelemente, im Folgenden Schutzsiebe genannt, vorgesehen. Diese haben die Aufgabe, die aus dem Störfall resultierenden Trümmer zurückzuhalten und gleichzeitig einen ausreichenden Wasserdurchsatz zu gewährleisten. Dabei muss sichergestellt sein, dass der durch die Trümmer verursachte Druckabfall den zulässigen Grenzwert nicht überschreitet.

Das Dokument DE-A1-30 04 682 offenbart ein Filtermodul, das als Sammelbehälter für Schlamm dient, der über eine Saugleitung angesogen wird.

Bisher bekannte, in Kernkraftwerken mit Druckwasserreaktoren (DWR) eingesetzte Schutzsiebe sind meist als flache Gittersegmente ausgebildet, die nur eine kleine Siebfläche aufweisen und die im Fall der Belastung mit faserförmigen Trümmerstoffen einen unzulässig hohen Druckabfall erzeugen. Schutzsiebelemente aus gewelltem und perforierten Blech bieten eine grössere wirksame Siebfläche. Unter Druckbelastung treten jedoch Verformungen auf, welche die Grösse derartiger Schutzsiebelemente begrenzen. In EP 0 818 227 A1 wird ein zylindrisches Saugsieb beschrieben, das zwar eine sehr grosse wirksame Siebfläche aufweist, aber nur in seltenen Fällen im Sumpfbereich eines DWR Kernkraftwerks einsetzbar ist, da die direkte Umgebung der Eintrittsöffnungen der Saugleitungen bauliche derart gestaltet ist, dass sie für den Einsatz zylindrischer Saugsiebe ungeeignet ist. Meist ist vor den Eintrittsöffnungen der Saugleitungen ein Saugraum für den Einbau von Schutzsiebelementen mit geeigneter Siebfläche vorgesehen. Aus Platzgründen ist der Saugraum im Sumpfbereich eines DWR Kernkraftwerken im Mittel relativ flach.

Aufgabe der Erfindung ist es, ein Schutzsieb zur Verfügung zu stellen, dessen wirksame Siebfläche wesentlich, z.B. um ein Mehrfaches, grösser ist, als die sich aus den äusseren Abmessungen ergebende Fläche, und das zum Abschirmen eines Saugraums und einer daran angeschlossenen Saugleitung im Sumpfbereich eines DWR Kernkraftwerks eingesetzt werden kann.

Diese Aufgabe wird erfindungsgemäss durch das in Anspruch 1 definierte Schutzsieb gelöst. Das erfindungsgemässe Schutzsieb zum Abschirmen eines Saugraums und einer daran angeschlossenen Saugleitung, insbesondere eines Saugraums und einer Saugleitung in einem Notkühlsystem eines Kernkraftwerks, umfasst mindestens ein Siebwandelement, das eine Ansaugseite und eine Abflussseite aufweist. Das Siebwandelement ist aus einer oder mehreren modularen, viereckigen Kassetteneinheiten aufgebaut, wobei die Kassetteneinheiten jeweils mehrere, zur Ansaugseite hin offene Siebtaschen enthalten, und wobei die Siebtaschen von Abflussspalten umgeben sind, welche Abflussspalten mit der Abflussseite verbunden sind oder zur Abflussseite hin offen sind.

Vorzugsweise sind die Kassetteneinheiten aneinanderreihbar, beispielsweise in einer Richtung, um das Siebwandelement in der gewünschten Grösse zusammenzustellen.

Vorzugsweise sind die Siebtaschen jeweils auf vier Seiten von Abflussspalten umgeben.

In einer bevorzugten Ausführungsform enthalten die Kassetteneinheiten beabstandet angeordnete Wände und/oder Zwischenwände und zwischen den Wänden beziehungsweise Zwischenwänden gebogene, insbesondere im Wesentlichen u-förmig gebogene, perforierte Wandsegmente, um die Saugtaschen zu bilden. Eine Mehrzahl von u-förmig gebogenen Wandsegmenten können vorteilhafterweise in einem länglichen, mäandrisch geformten Teil ausgebildet sein. Vorzugsweise sind die Wände und/oder Zwischenwände der Kassetteneinheiten als Doppelwände und/oder Abflussspalte ausgebildet. Vorzugsweise weisen die Saugtaschen eine Tiefe von grösser als 0.1 m, insbesondere grösser als 0.2 m auf.

In einer bevorzugten Ausführungsvariante sind die Wände und/oder Zwischenwände der Kassetteneinheiten durch Verbindungselemente wie z.B. Schrauben oder Bolzen gegeneinander verspannt. Vorzugsweise ist der Abstand zwischen zwei Wänden und/oder Zwischenwänden und/oder der Abstand zwischen den beiden Seiten einer Doppelwand durch Distanzelemente bestimmt.

In einer weiteren bevorzugten Ausführungsvariante sind die Wände und/oder Zwischenwände und/oder die u-förmig gebogenen Wandsegmente aus perforiertem, vorzugsweise gelochtem Blech gefertigt.

Das erfindungsgemässe Schutzsieb hat den Vorteil, dass mit den Kassetteneinheiten relativ grossflächige und vergleichsweise flache Siebwandelemente zusammengestellt werden können. D.h., dass die Länge und Breite der Siebwandelemente in einem weiten Bereich wählbar ist, während die Dicke im Vergleich zur Länge und/oder Breite typischerweise deutlich kleiner ist. Weiter ist es möglich mehrere Siebwandelemente zu einem grösseren Schutzsieb und/oder einem Schutzsieb mit komplexer Form zusammenzustellen. Damit eignen sich die erfindungsgemässen Schutzsiebe besonders zum Abschirmen eines Saugraums und einer daran angeschlossenen Saugleitung im Sumpfbereich eines DWR Kernkraftwerks, wo Saugräume unterschiedlicher Grösse abgeschirmt werden müssen, wobei die zur Verfügung stehende Höhe begrenzt ist.

Das erfindungsgemässe Schutzsieb eignet sich insbesondere auch zum Nachrüsten bestehender Anlagen, in denen ein Schutzsieb mit ungenügender Siebfläche unter Beibehaltung der ursprünglichen Aussenabmessungen durch ein Schutzsieb mit grösserer wirksamer Siebfläche ersetzt werden soll oder muss. Besonders vorteilhaft ist, dass die taschenförmige Gestaltung der Siebfläche einen in fünf Richtungen abfliessenden Penetrationsfluss ermöglicht. Die erfindungsgemässen Schutzsiebe weisen typischerweise eine fünf- bis zwanzigmal grössere wirksame Siebfläche auf als ein Schutzsieb bestehend aus einer ebenen Siebfläche mit entsprechenden Aussenabmessungen. Dank der grossen wirksamen Siebfläche verursachen die die Siebfläche belegenden Trümmer und Materialien und die Wasser-Penetrationsgeschwindigkeit einen wesentlich geringeren Durchflusswiderstand, sodass der über das Schutzsieb entstehende Druckabfall entsprechend reduziert wird.

Ein weiterer Vorteil des erfindungsgemässen Schutzsiebs ist die Druckbelastbarkeit der aus den Kassetteneinheiten zusammengestellten Siebwandelemente. Die unter Spannung zusammengehaltenen Wände beziehungsweise Zwischenwände der Kassetteneinheiten und die Schenkel der U-förmig gebogenen Wandsegmente bilden ein gitterförmiges Netz von Verstärkungsrippen, sodass die Kassetteneinheiten eine hohe Formstabilität aufweisen und mit höherem Druck belastbar sind, als beispielsweise ein gewelltes Blech entsprechender Grösse.

Weitere vorteilhafte Ausführungsformen gehen aus den abhängigen Ansprüchen und der Zeichnung hervor.

Im Folgenden wird die Erfindung an Hand der Ausführungsbeispiele und an Hand der Zeichnung näher erläutert. Es zeigen:
- Fig. 1: Schnitt durch ein Ausführungsbeispiel einer Ansaugstelle mit einem Schutzsieb gemäss vorliegender Erfindung,
- Fig. 2: eine Schrägansicht eines weiteren Ausführungsbeispiels einer Ansaugstelle mit einem Siebwandelement eines Schutzsiebs gemäss vorliegender Erfindung,
- Fig. 3: eine Schrägansicht einer Kassetteneinheit des in Fig. 2 gezeigten Ausführungsbeispiels,
- Fig. 4: einen vergrösserten Ausschnitt einer Ausführungsvariante zu der in Fig. 3 gezeigten Kassetteneinheit,
- Fig. 5a: einen Querschnitt durch zwei nebeneinander liegende Saugtaschen gemäss einer weiteren Ausführungsvariante,
- Fig. 5b: einen Längsschnitt durch eine Reihe von Saugtaschen gemäss der in Fig. 5a gezeigten Ausführungsvariante, und
- Fig. 5c: Schrägansicht einer Saugtasche gemäss der in den Figuren 5a und 5b gezeigten Ausführungsvariante mit Markierung der Abflussrichtungen der Penetrationsströme.

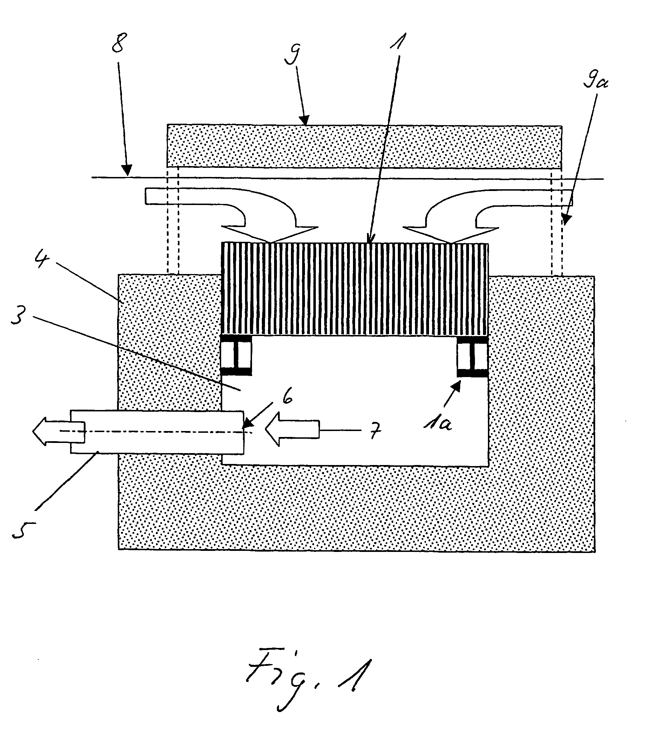

Fig. 1 zeigt einen Schnitt durch ein Ausführungsbeispiel einer Ansaugstelle für Kühlwasser, beispielsweise einer Ansaugstelle im Sumpfbereich eines Kernkraftwerks, insbesondere eines DWR Kraftwerks. Im Ausführungsbeispiel ist ein Schutzsieb 1 gemäss vorliegender Erfindung über einem Saugraum 3 angeordnet, der durch eine Saugleitung 5 mit einer Pumpe verbunden ist, die in Fig. 1 nicht gezeigt ist. Ein von der Pumpe erzeugter Saugstrom 7 aus dem Saugraum 1 mündet in eine im Saugraum angeordnete Eintrittsöffnung 6 der Saugleitung 5. Der Saugraum 3 ist gegen oben durch das Schutzsieb 1 und in den übrigen Richtungen durch eine Wandung 4 begrenzt, die beispielsweise aus Beton bestehen kann. Das Schutzsieb 1 schirmt den Saugraum 3 gegen oben ab und verhindert, dass Trümmer und störende Teile wie beispielsweise Teile aus Isolierstoffen, die vom Kühlwasser mitgeführt werden, in den Saugraum 3 und die Saugleitung 5 gelangen können. Im oberen Teil des Saugraums 3 sind Trägerelemente 1a vorgesehen, auf denen das Schutzsieb 1 angeordnet ist, und die beispielsweise aus Stahlprofilen wie z.B. Winkel-, T-oder H-Profilen bestehen können.

Im Ausführungsbeispiel sind das Schutzsieb 1 und der Saugraum 3 unter einem Wasserspiegel 8 angeordnet, der den Sumpfbereich eines in Fig. 1 nicht dargestellten Sicherheitsbehälters bedeckt. Über dem Schutzsieb 1 und beabstandet von demselben ist im Ausführungsbeispiel ein Schutzdach 9 vorgesehen, welches das Schutzsieb seitlich überragt, um das Schutzsieb vor mechanischer Beschädigung zu schützen. Weiter sind im Einlassbereich seitlich des Schutzsiebs 1 zwischen dem Schutzdach 9 und der Wandung 4 Trümmerrechen 9a vorgesehen, um grössere Trümmer zurückzuhalten.

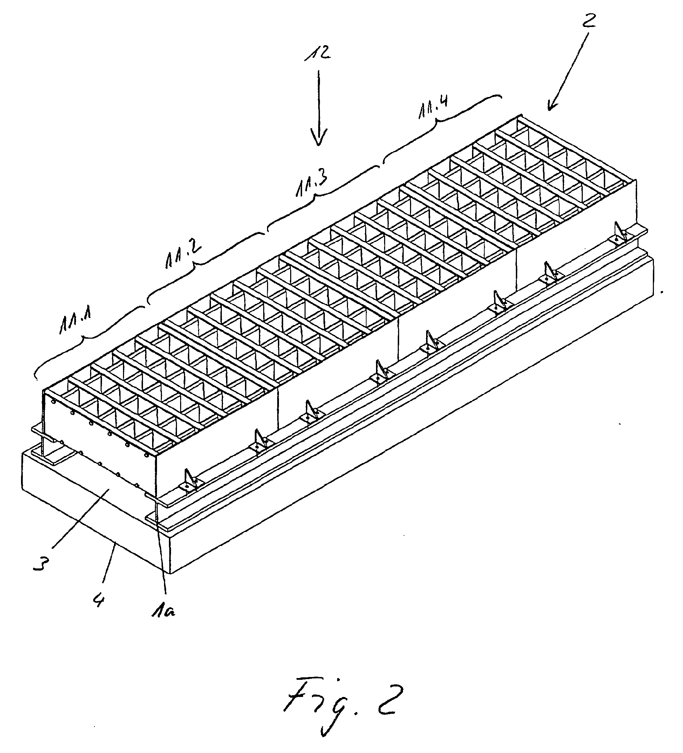

Fig. 2 zeigt ein weiteres Ausführungsbeispiel einer Ansaugstelle mit einem Siebwandelement eines Schutzsiebs gemäss vorliegender Erfindung in Schrägansicht. Das Siebwandelement 2 ist aus vier modularen, viereckigen Kassetteneinheiten 11.1-11.4 zusammengestellt, die seitlich in einer Richtung aneinandergereiht angeordnet sind. Selbstverständlich können die Anzahl und die Anordnung der Kassetteneinheiten variiert werden, um Siebwandelemente der gewünschten Grösse zusammenzustellen. Der Aufbau der Kassetteneinheiten 11.1-11.4 wird in den folgenden Abschnitten näher erläutert. Das Siebwandelement 2 weist eine Ansaugseite 12 und eine Abflussseite auf, die in der vorliegenden Schrägansicht nicht sichtbar ist. Das Siebwandelement 2 ist über einem Saugraum 3 angeordnet, der auf einer Seite durch das Siebwandelement 2 gebildet wird und auf der gegenüberliegenden Seite durch ein Wandelement 4, das beispielsweise als Betonplatte ausgebildet sein kann. Mit Vorteil kann als Wandelement 4 auch eine Bodenplatte eines Sicherheitsbehälters verwendet werden oder ein anderes Konstruktionsteil am oder im Sicherheitsbehälter eines Kernkraftwerks. Auf dem Wandelement 4 sind im Ausführungsbeispiel zwei parallele Träger- und/oder Abstandselemente 1a angeordnet, auf denen das Siebwandelement 2 befestigt ist. Die Träger- beziehungsweise Abstandselemente, die beispielsweise als H-förmige Stahlprofile ausgeführt sein können, dienen gleichzeitig als seitliche Begrenzung des Saugraums 3.

In Fig. 2 ist der Saugraum 3 in den verbleibenden zwei Richtungen offen dargestellt, damit der Aufbau der Ansaugstelle besser erkennbar ist. Um den Aufbau zu vervollständigen muss der Saugraum 3 auf den noch offenen Seiten mittels Wandelementen geschlossen werden, und falls sich die Eintrittsöffnung der Saugleitung ausserhalb des dargestellten Bereichs befindet, zusätzlich entsprechend verlängert werden.

In einer bevorzugten Ausführungsvariante sind mehrere Begrenzungsflächen eines Saugraums mittels Siebwandelementen abgeschirmt. Auf diese Weise ist es beispielsweise möglich, einen der baulichen Umgebung angepassten Saug- beziehungsweise Siebkörper zu bilden.

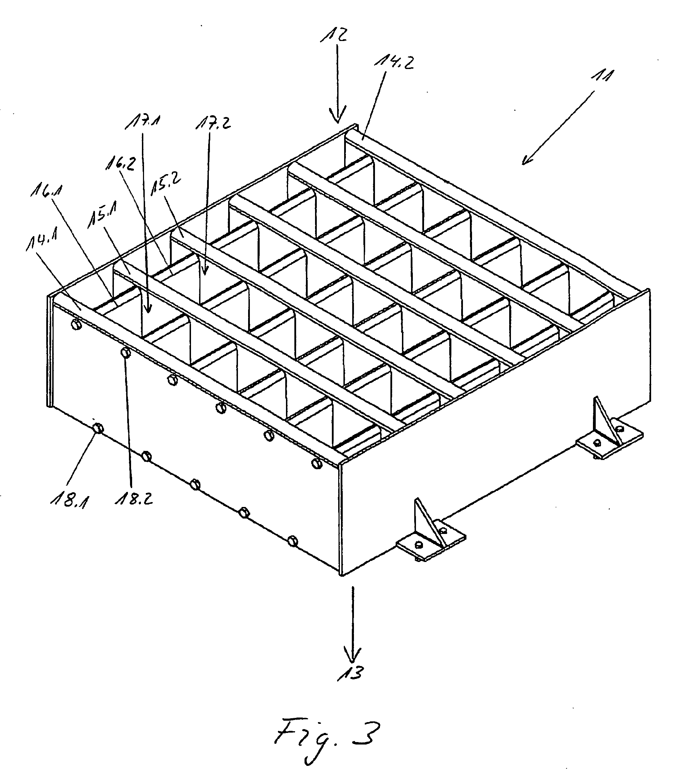

Fig. 3 zeigt eine Schrägansicht einer Kassetteneinheit des in Fig. 2 gezeigten Ausführungsbeispiels. Die Kassetteneinheit 11 weist eine Ansaugseite 12 und eine Abflussseite 13 auf und umfasst Aussenwände 14.1, 14.2 und je nach Bedarf eine oder mehrere Zwischenwände 15.1, 15.2, welche Aussenwände und Zwischenwände beabstandet voneinander angeordnet sind. Weiter umfasst die Kassetteneinheit 11 zwischen den Aussenwänden 14.1, 14.2 beziehungsweise Zwischenwände 15.1, 15.2 gebogene und perforierte Wandsegmente 16.1, 16.2, um Sautaschen 17.1, 17.2 zu bilden. Die gebogenen Wandsegmente können beispielsweise u-förmig, v- förmig oder ähnlich ausgebildet sein. Mit Vorteil sind in einer Reihe angeordnete Wandsegmente 16.1, 16.2 als länglich geformte, mändrische Teile ausgebildet. Die Wände 14.1, 14.2 und/oder Zwischenwände 15.1, 15.2, und/oder die gebogenen Wandsegmente (16, 16.1, 16.2) sind vorzugsweise aus gelochtem Blech gefertigt. Der Durchmesser der Perforationslöcher liegt typisch im Bereich von 1 bis 10 mm, vorzugsweise 2 bis 5 mm. Vorzugsweise weisen die Saugtaschen 17.1, 17.2 eine Tiefe von grösser als 0.1 m, insbesondere grösser als 0.2 m auf. Die Wände 14.1, 14.2 und/oder Zwischenwände 15.1, 15.2 sind im Ausführungsbeispiel mittels Verbindungselementen 18.1, 18.2 verbunden und gegeneinander verspannt.

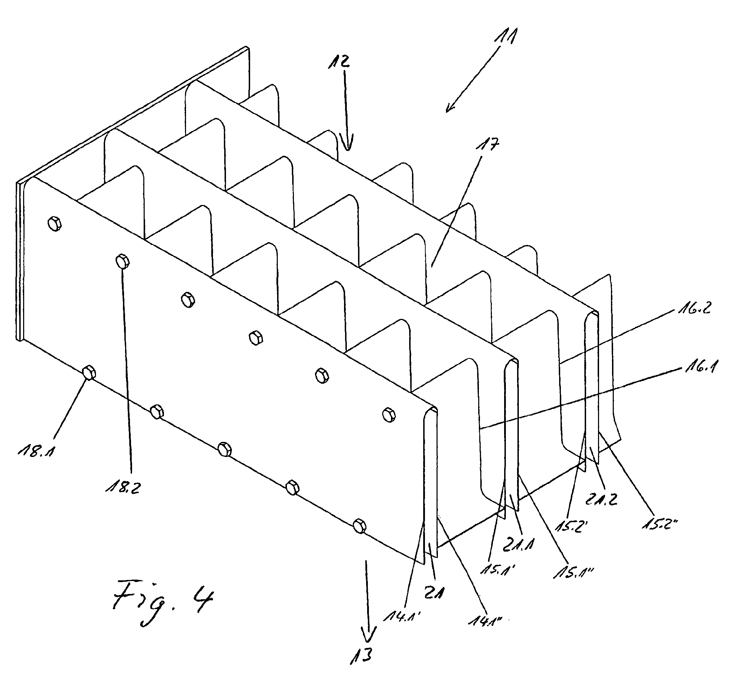

Fig. 4 zeigt einen vergrösserten Ausschnitt einer Ausführungsvariante zu der in Fig. 3 gezeigten Kassetteneinheit in Schrägansicht. In dieser Ausführungsvariante sind die Wände und/oder Zwischenwände der Kassetteneinheiten 11 perforiert und als Doppelwände 14.1', 14.1", 14.2', 14.2", 15.1', 15.1", 15.2', 15.2" ausgebildet. Vorzugsweise sind die Doppelwände zur Ansaugseite hin geschlossen und zur Abflussseite hin offen, sodass sie Abflussspalten 21, 21.1, 21.2 bilden. Dank der Doppelwände sind die Saugtaschen 17 auf mindestens zwei Seiten von den genannten Abflussspalten 21, 21.1, 21.2 umgeben, durch die das aus den Saugtaschen in die Doppelwände fliessende Wasser abfliessen kann.

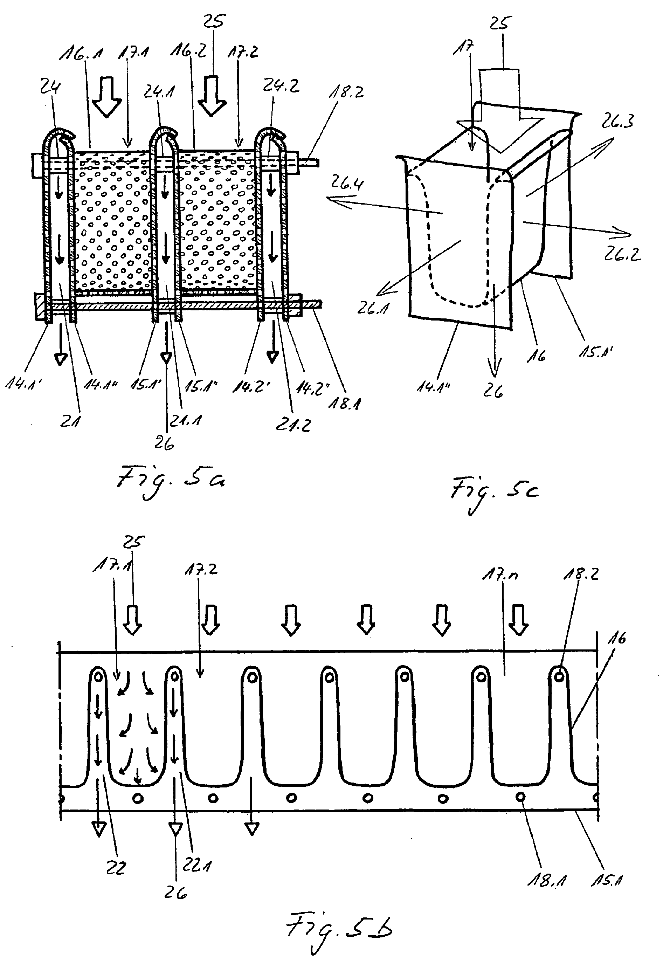

Fig. 5a zeigt einen Querschnitt durch zwei nebeneinander liegende Saugtaschen gemäss einer weiteren Ausführungsvariante der vorliegenden Erfindung. Die Wände und Zwischenwände sind in dieser Ausführungsvariante ebenfalls als Doppelwände 14.1', 14.1", 14.2', 14.2", 15.1', 15.1" ausgeführt. Die Doppelwände werden z.B. aus jeweils zwei perforierten, beabstandet angeordneten Wandteilen gebildet, die derart ausgebildet sind, dass die Doppelwände zur Ansaugseite hin abgeschlossen sind, während sie zur Abflussseite hin offen sind. Zwischen den Doppelwänden 14.1', 14.1", 14.2', 14.2", 15.1', 15.1" sind jeweils perforierte, u-förmig gebogene Wandsegment 16.1, 16.2 angeordnet, die zusammen mit den Doppelwänden Saugtaschen 17.1 17.2 bilden. Die Doppelwände dienen dabei als seitliche Abflussspalte 21, 21.1 21.2, durch die seitliche Penetrationsströme aus den Saugtaschen abfliessen können. Das Bezugszeichen 25 bezeichnet dabei die ansaugseitige Zuflussrichtung und das Bezugszeichen 26 die Abflussrichtung. Weitere Penetrationsströme aus den Saugtaschen fliessen durch die perforierten, u-förmig gebogenen Wandsegment 16.1, 16.2. Die Doppelwände 14.1', 14.1", 14.2', 14.2", 15.1', 15.1" beziehungsweise die Wandteile derselben sind mittels Verbindungselementen 18.1, 18.2, die beispielsweise als Schrauben, Gewindebolzen oder Bolzen ausgebildet sein können, verbunden und gegeneinander verspannt. Der gegenseitige Abstand der Wandteile in den Doppelwänden kann beispielsweise durch Distanzelemente 24, 24.1, 24.2 festgelegt sein, während der Abstand zwischen den Doppelwänden durch die perforierten, u-förmig gebogenen Wandsegmente 16.1, 16.2 bestimmt ist.

Fig. 5b zeigt einen Längsschnitt durch eine Reihe von Saugtaschen gemäss der in Fig. 5a gezeigten Ausführungsvariante. Eine Reihe von perforierten, u-förmig gebogenen Wandsegmenten sind in einem länglich geformten, mäandrischen Teil 16 ausgebildet. Dieser Teil kann durch Biegeoperationen günstig hergestellt werden, beispielsweise aus gelochtem Blech. Im mäandrischen Teil 16 sind zwischen den u-förmig gebogenen Wandsegmenten Abflussspalte 22, 22.1 ausgebildet, die zur Ansaugseite hin geschlossen und zur Abflussseite hin offen sind. Das Bezugszeichen 25 bezeichnet dabei die ansaugseitige Zuflussrichtung und das Bezugszeichen 26 die Abflussrichtung. Die u-förmig gebogenen Wandsegmente bilden zusammen mit den Wänden beziehungsweise Doppelwänden 15.1 die Saugtaschen 17.1, 17.2, 17.n.

Die Saugtaschen gemäss der in den Fig. 5a und 5b gezeigten Ausführungsvariante haben den Vorteil, dass sie auf vier Seiten von Abflussspalten 21, 21.1, 21.2, 22, 22.1 umgeben sind. Zusätzlich kann der Penetrationsfluss, der durch den Boden der Saugtaschen gesogen wird, direkt zur Abflussseite hin abfliessen, d.h. der Abfluss des Penetrationsflusses aus den Saugtaschen erfolgt allseitig ohne störenden Widerstand. Fig. 5c zeigt eine Schrägansicht einer derartigen Saugtasche 17 mit Markierung der Abflussrichtungen 26, 26.1, 26.2, 26.3, 26.4 der Penetrationsströme.

Im Vergleich zu ebenen Schutzsieben herkömmlicher Bauart weisen Schutzsiebe gemäss der vorliegenden Erfindung bei gleicher Länge und Breite eine wesentlich grössere wirksame Siebfläche auf. Trümmer und Materialien, welche die Saugfläche belegen, verursachen daher einen wesentlich geringeren Durchflusswiderstand, sodass der über das erfindungsgemässe Schutzsieb entstehende Druckabfall entsprechend reduziert wird. Ein weiterer Vorteil der erfindungsgemässen Schutzsiebe ist die vergleichsweise hohe Formstabilität und Druckbelastbarkeit sowie die robuste Struktur, die Montage- und Reparaturarbeiten erleichtert.

## Patentansprüche

1. Schutzsieb, um einen Saugraum (3) und eine daran angeschlossene Saugleitung (5) in einem Notkühlsystem eines Kernkraftwerks abzuschirmen, welches Schutzsieb (1) mindestens ein Siebwandelement (2) umfasst, das eine Ansaugseite (12) und eine Abflussseite (13) aufweist, **dadurch gekennzeichnet, dass** das Siebwandelement (2) aus einer oder mehreren modularen, viereckigen Kassetteneinheiten (11, 11.1-11.4) aufgebaut ist, und dass die Kassetteneinheiten jeweils beabstandet angeordnete Wände (14.1, 14.2, 14.1', 14.1", 14.2', 14.2") und/oder Zwischenwände (15.1, 15.2, 15.1', 15.1 ", 15.2', 15.2") enthalten und zwischen den Wänden beziehungsweise Zwischenwänden gebogene, insbesondere im Wesentlichen u-förmig gebogene, perforierte Wandsegmente (16, 16.1, 16.2), um mehrere, zur Ansaugseite (12) hin offene Siebtaschen (17, 17.1, 17.2) zu bilden, und die Siebtaschen von Abflussspalten (21, 21.1, 21.2, 22, 22.1) umgeben sind, welche Abflussspalten mit der Abflussseite (13) verbunden sind oder zur Abflussseite hin offen sind, wobei die Wände (14.1, 14.2, 14.1', 14.1", 14.2', 14.2") und/oder Zwischenwände (15.1, 15.2, 15.1', 15.1 ", 15.2', 15.2") und/oder die perforierten und gebogenen Wandsegmente (16, 16.1, 16.2) aus perforiertem Blech gefertigt sind.

2. Schutzsieb nach Anspruch 1, wobei die Kassetteneinheiten (11, 11.1-11.4) aneinanderreihbar sind, um das Siebwandelement (2) in der gewünschten Grösse zusammenzustellen.

3. Schutzsieb nach einem der Ansprüche 1 oder 2, wobei die Siebtaschen (17, 17.1, 17.2) jeweils auf vier Seiten von Abflussspalten (21, 21.1, 21.2, 22, 22.1) umgeben sind.

4. Schutzsieb nach einem der Ansprüche 1 bis 3, wobei die Siebtaschen (17, 17.1, 17.2) eine Tiefe von grösser als 0.1 m, insbesondere grösser als 0.2 m aufweisen.

5. Schutzsieb nach einem der Ansprüche 1 bis 4, wobei die Wände (14.1, 14.2, 14.1', 14.1", 14.2', 14.2") und/oder Zwischenwände (15.1, 15.2, 15.1', 15.1", 15.2', 15.2") der Kassetteneinheiten (11, 11.1-11.4) als Doppelwände und/oder Abflussspalte (21, 21.1, 21.2, 22) ausgebildet sind.

6. Schutzsieb nach Anspruch 5, wobei der Abstand zwischen den beiden Seiten (14.1', 14.1 ", 14.2', 14.2", 15.1', 15.1", 15.2', 15.2") einer der Doppelwände durch Distanzelemente (24, 24.1, 24.2) bestimmt ist.

7. Schutzsieb nach einem der Ansprüche 1 bis 6, wobei die Wände (14.1, 14.2, 14.1', 14.1", 14.2', 14.2") und/oder Zwischenwände (15.1, 15.2, 15.1', 15.1", 15.2', 15.2") der Kassetteneinheiten (11, 11.1-11.4) mittels Verbindungselementen (18.1, 18.2) gegeneinander verspannt sind.

8. Schutzsieb nach einem der Ansprüche 1 bis 7, wobei der Abstand zwischen zwei Wänden (14.1, 14.2, 14.1', 14.1", 14.2', 14.2") und/oder Zwischenwänden (15.1, 15.2, 15.1', 15.1", 15.2', 15.2") durch Distanzelemente (24, 24.1, 24.2) bestimmt ist.

## Claims

1. Protective screen for screening off a suction space (3) and a suction duct (5) connected to it in an emergency cooling system of a nuclear power plant, said protective screen (1) including at least one screen wall element (2) having a suction side (12) and an outflow side (13), **characterized in that** the screen wall element (2) is built up of one or more modular four-cornered cassette units (11, 11.1-11.4); and **in that** the cassette units each contain respectively spaced apart walls (14.1, 14.2, 14.1', 14.1", 14.2', 14.2") and/or intermediate walls (15.1, 15.2, 15.1', 15.1", 15.2', 15.2") and bent wall segments, in particular essentially U-shaped, bent, perforated wall segments (16, 16.1, 16.2) between the walls and/or the intermediate walls in order to form a plurality of screen pockets (17, 17.1, 17.2) open towards the suction side (12), and **in that** the screen pockets are surrounded by outflow gaps (21, 21.1, 21.2, 22, 22.1) which are connected to the outflow side (13) or are open towards the outflow side (13), with the walls (14.1, 14.2, 14.1', 14.1", 14.2', 14.2") and/or the intermediate walls (15.1, 15.2, 15.1', 15.1", 5.2', 15.2") and/or the perforated and bent wall segments (16, 16.1; 16.2) being manufactured from perforated sheet metal.

2. Protective screen in accordance with claim 1, wherein the cassette units (11, 11.1 - 11.4) can be arranged in rows in order to form the screen wall element (2) in the desired size.

3. Protective screen in accordance with any one of the claims 1 or 2, wherein the screen pockets (17, 17.1, 17.2) are each surrounded on four sides by outflow gaps (21, 21.1, 21.2, 22, 22.1).

4. Protective screen in accordance with any one of the claims 1 to 3, wherein the screen pockets (17, 17.1, 17.2) have a depth of greater than 0.1 m, in particular greater than 0.2 m.

5. Protective screen in accordance with any one of the claims 1 to 4, wherein the walls (14.1, 14.2, 14.1', 14.1", 14.2', 14.2") and/or the intermediate walls (15.1, 15.2, 15.1', 15.1", 15.2', 15.2") of the cassette units (11, 11.1-11.4) are formed as double walls and/or outflow gaps (21, 21.1, 21.2, 22).

6. Protective screen in accordance with claim 5, wherein the spacing between the two sides (14.1', 14.1", 14.2", 15.1', 15.1", 15.2', 15.2") of one of the double walls is determined by spacer elements (24, 24.1, 24.2).

7. Protective screen in accordance with any one of the claims 1 to 6, wherein the walls (14.1, 14.2, 14.1', 14.1", 14.2', 14.2") and/or the intermediate walls (15.1, 15.2, 15.1', 15.1", 15.2', 15.2") are clamped against one another by means of connection elements (18.1, 18.2).

8. Protective screen in accordance with any one of the claims 1 to 7, wherein the spacing between two walls (14.1, 14.2, 14.1', 14.1", 14.2', 14.2") and/or intermediate walls (15.1, 15.2, 15.1', 15.1", 15.2', 15.2") is determined by spacer elements (24, 24.1, 24.2).

## Revendications

1. Tamis de protection, pour protéger une bouche d'aspiration (3) et un conduit d'aspiration (5) relié à celle-ci dans un système de refroidissement de secours d'une centrale nucléaire, ce tamis de protection (1) comprenant au moins un élément de paroi de tamisage (2) qui présente un côté aspiration (12) et un côté écoulement (13), **caractérisé en ce que** l'élément de paroi de tamisage (2) est constitué d'une ou de plusieurs unités de cassette carrées modulaires (11, 11.1-11.4), et **en ce que** les unités de cassette comprennent des parois respectivement espacées (14.1, 14.2, 14.1', 14.1", 14.2', 14.2") et/ou des parois intermédiaires (15.1, 15.2, 15.1', 15.1", 15.2', 15.2") et des segments de paroi perforés (16, 16.1, 16.2) courbés entre les parois respectivement parois intermédiaires, en particulier courbés sensiblement en forme de u, pour former plusieurs poches de tamisage (17, 17.1, 17.2) ouvertes vers le côté aspiration (12), et que les poches de tamisage sont entourées par des fentes d'écoulement (21, 21.1, 21.2, 22, 22.1), lesdites fentes d'écoulement étant reliées au côté d'écoulement (13) ou sont ouvertes vers le côté d'écoulement, où les parois (14.1, 14.2, 14.1', 14.1", 14.2', 14.2") et/ou les parois intermédiaires (15.1, 15.2, 15.1', 15.1", 15.2', 15.2") et/ou les segments de paroi perforés et courbés (16, 16.1, 16.2) sont fabriqués en tôle perforée.

2. Tamis de protection selon la revendication 1, où les unités de cassette (11, 11.1-11.4) peuvent être disposées en rangée pour former l'élément de paroi de tamisage (2) dans la grandeur recherchée.

3. Tamis de protection selon l'une des revendications 1 ou 2, où les poches de tamisage (17, 17.1, 17.2) sont entourées à chaque fois sur quatre côtés de fentes d'écoulement (21, 21.1, 21.2, 22, 22.1).

4. Tamis de protection selon l'une des revendications 1 à 3, où les poches de tamisage (17, 17.1, 17.2) présentent une profondeur plus grande que 0,1 m, en particulier plus grande que 0,2 m.

5. Tamis de protection selon l'une des revendications 1 à 4, où les parois (14.1, 14.2, 14.1', 14.1", 14.2', 14.2") et/ou les parois intermédiaires (15.1, 15.2, 15.1', 15.1", 15.2', 15.2") des unités de cassette (11, 11.1-11.4) sont réalisées comme parois doubles et/ou fentes d'écoulement (21, 21.1, 21.2, 22).

6. Tamis de protection selon la revendication 5, où l'écart entre les deux côtés (14.1', 14.1", 14.2', 14.2", 15.1', 15.1", 15.2', 15.2") d'une des parois doubles est déterminé par des éléments d'écartement (24, 24.1, 24.2).

7. Tamis de protection selon l'une des revendications 1 à 6, où les parois (14.1, 14.2, 14.1', 14.1", 14.2', 14.2") et/ou parois intermédiaires (15.1, 15.2, 15.1', 15.1", 15.2', 15.2") des unités de cassette (11, 11.1-11.4) sont mises en tension par des éléments de liaison (18.1, 18.2) les unes contre les autres.

8. Tamis de protection selon l'une des revendications 1 à 7, où l'écart entre deux parois (14.1, 14.2, 14.1', 14.1" 14.2', 14.2") et/ou parois intermédiaires (15.1, 15.2, 15.1', 15.1", 15.2', 15.2") est défini par des éléments d'écartement (24, 24.1, 24.2).
